# EUROPÄISCHE PATENTSCHRIFT

(11) **EP 2 022 306 B1**
(45) Veröffentlichungstag und Bekanntmachung des Hinweises auf die Patenterteilung: **22.12.2010**
(21) Anmeldenummer: 08160641.0
(22) Anmeldetag: 17.07.2008
(51) Int. Cl.: A01B 69/00, B62D 13/00

(54) **Steuerungssystem zum Lenken eines an ein landwirtschaftliches Nutzfahrzeug angekoppelten Anbaugeräts**
Control system for steering an extension device coupled on to an agricultural vehicle
Système de commande destiné à la conduite d'un élément auxiliaire couplé à un véhicule utilitaire agricole

(30) Priorität: 02.08.2007 DE 102007036429
(43) Veröffentlichungstag der Anmeldung: 11.02.2009
(73) Patentinhaber: Deere & Company, Moline, IL 61265-8098 (US)
(72) Erfinder: Hahn, Klaus, 68199 Mannheim (DE)
(74) Vertreter: Dehnhardt, Florian Christopher

(56) Entgegenhaltungen:
- EP-A- 0 577 571
- EP-A- 1 088 743
- EP-A- 1 364 573
- EP-A- 1 541 021
- EP-A- 1 772 047
- EP-A- 1 772 350
- WO-A-2006/005124
- FR-A- 2 828 532
- US-A- 5 558 350
- US-A1- 2004 124 605
- US-A1- 2004 217 575

## Beschreibung

Die Erfindung betrifft ein Steuerungssystem zum Lenken eines an ein landwirtschaftliches Nutzfahrzeug angekoppelten Anbaugeräts sowie ein Verfahren zum Betreiben eines derartigen Steuerungssystems.

Als landwirtschaftliche Nutzfahrzeuge kommen insbesondere Traktoren in Frage, obwohl grundsätzlich die Verwendung der vorliegenden Erfindung nicht auf Traktoren und landwirtschaftliche Nutzfahrzeuge beschränkt ist, sondern vielmehr auch in Zusammenhang mit industriellen Nutzfahrzeuge denkbar wäre. Dennoch werden im Folgenden Ausführungen am Beispiel eines landwirtschaftlichen Nutzfahrzeugs in Gestalt eines Traktors gemacht, da ein Traktor vielseitig einsetzbar ist und in der Regel eine Vielzahl unterschiedlicher Anbaugeräte mit jeweils unterschiedlichen Funktionen angekoppelt werden können.

Traktoren umfassen ein Hydrauliksystem, welches in der Regel eine von einem Verbrennungsmotor angetriebene Hydraulikpumpe, einen Hydrauliktank und eine Vielzahl von weiteren Hydraulikkomponenten aufweist. An dieser Stelle seien lediglich beispielhaft Ventile, Drosseln und hydraulische Aktuatoren genannt. Üblicherweise weist ein Traktor hydraulische Zusatzventile auf, mit welchen Arbeitsfunktionen eines an den Traktor ankoppelbaren Anbaugeräts ansteuerbar sind. Insoweit werden Arbeitsfunktionen des Anbaugeräts von dem Hydrauliksystem des Traktors versorgt. Diese Zusatzventile werden in der Regel elektronisch angesteuert. Als Beispiele für Arbeitsfunktionen sei das Heben oder Senken von Geräteteilen genannt, wobei Geräteteile insbesondere Spurreißer, eine auf ein Bodenbearbeitungsgerät aufgesattelte Sämaschine, Felder eines Bodenbearbeitungsgeräts, Geräteklappungen oder Arbeitstiefeneinstellungen sein können. Mit dem Hydrauliksystem des Traktors kann auch mindestens ein Hydromotor des Anbaugeräts, beispielsweise eines Gebläses einer pneumatischen Sämaschine, angetrieben werden.

Insbesondere das vom Bediener einzuleitende Heben und Senken des Anbaugeräts ist bei einer Rückwärtsfahrt des Traktors oder beim Wenden unumgänglich, um Beschädigungen des Anbaugeräts und/oder des Bodens zu vermeiden. Werden schwere Gerätekombinationen angehängt, als Beispiel sei die Säkombination aus Kreiselegge und Sämaschine genannt, muss das aufgesattelte Gerät - beispielsgemäß die Sämaschine - in gewissen Fällen über ein hydraulisches Zusatzsteuergerät zusätzlich angehoben werden, um die Baulänge der Säkombination zu verkürzen. Hierdurch kann ein geringeres Ausschwenken bei der Kurvenfahrt erzielt werden und/oder der Schwerpunkt der Säkombination kann in Richtung des Traktors verlagert werden, was der Hubkraftanforderung und der Vorderachsentlastung des Traktors zugute kommt. Üblicherweise wird dieser Vorgang durch den Bediener manuell durchgeführt und ist dementsprechend zeitaufwändig.

Die Ansteuerung der hydraulischen Zusatzventile wird auch in eine Ablaufsteuerung bei einem Vorgewende-Management-System einbezogen. Sie ist dort jedoch Bestandteil eines zusammenhängenden Ablaufs und kann in der Regel nicht einzeln angesprochen werden.

Ferner sind aus einem Traktor und einem Anbaugerät bestehende Gespanne mit einer Nachlauflenkung bzw. einer Nachlaufachse bekannt. Derartige Anbaugeräte bzw. Anhänger weisen mindestens eine Lenkachse auf. Mit der Lenkachse kann eine verbesserte Wendigkeit und ein reduzierter Reifenabrieb erzielt werden. Die Lenkachse eines solchen Anbaugeräts ist mit einem auf hydraulischer Basis arbeitenden Lenkzylinder gekoppelt und kann durch Betätigen eines entsprechend angeordneten Sperrventils angesteuert werden. Entweder wird das Sperrventil auf Durchfluss geschaltet, so dass der Lenkzylinder eine "Schwimmstellung" einnimmt, bei welcher die Lenkachse einlenken kann. Oder aber das Sperrventil wird in eine gesperrte Stellung verbracht, in der die Lenkachse auf Geradeausstellung gebracht und in diesem Zustand gehalten wird. Solche Nachlauflenkungen weisen insbesondere bei schneller Fahrt und am Seitenhang mangelnde Geradeauslaufeigenschaften auf, wenn die Lenkung der Räder nicht gesperrt ist. Auch bei einer Rückwärtsfahrt lenken Nachlauflenkungen üblicherweise in die falsche Richtung ein. Daher ist in solchen Fahrsituationen das Sperrventil manuell von dem Bediener des Traktors anzusteuern und entsprechend zu blockieren.

Alternativ zur manuellen Ansteuerung eines derartigen Sperrventils sind mechanisch-hydraulische Zwangslenkungen bekannt. Hierbei wird neben einer Ankopplung des Anbaugeräts mittels einer Deichsel ein zusätzliches Gestänge des Anbaugeräts am Traktor adaptiert und angelenkt. Über dieses zusätzliche Gestänge kann ein zusätzlicher Geberzylinder angesteuert werden. Hierzu muss jedoch das zusätzliche Gestänge individuell an die jeweilige Nutzfahrzeug-Anbaugeräte-Kombination angepasst bzw. einjustiert werden. Weiterhin gestaltet sich die Ankopplung des Anbaugeräts mit dem Gestänge an einen Traktor als umständlich. Solche Zwangslenkungen schränken den maximal erzielbaren Deichselwinkel ein, so dass das Gespann insgesamt einen größeren Wenderadius aufweist. Auch ist die hydraulische Verschaltung bei Zwangslenkungen komplexer und damit teurer.

Ein Steuerungssystem gemäß dem Oberbegriff des Anspruchs 1 ist aus der EP-A-1 364 573 bekannt.

Der vorliegenden Erfindung liegt daher die Aufgabe zugrunde, ein Steuerungssystem und ein Verfahren zum Betreiben eines Steuerungssystems der eingangs genannten Art anzugeben und weiterzubilden, durch welches die vorgenannten Probleme überwunden werden. Insbesondere soll eine in konstruktiver Hinsicht unkomplizierte und vorzugsweise kostengünstigere Möglichkeit gefunden werden, ein an ein landwirtschaftliches Nutzfahrzeug angekoppeltes Anbaugerät in unterschiedlichen Fahrsituationen zu lenken.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Steuerungssystem zum Lenken eines an ein landwirtschaftliches Nutzfahrzeug angekoppelten Anbaugeräts der eingangs genannten Art dadurch gekennzeichnet, dass das Steuerungssystem eine Steuereinrichtung, mindestens einen Sensor, ein dem Nutzfahrzeug zugeordnetes Hydrauliksystem, ein elektronisch ansteuerbares Hydraulikventil, einen dem Anbaugerät zugeordneten hydraulischen Aktuator und mindestens ein dem Anbaugerät zugeordnetes lenkbares Rad aufweist. Mit dem mindestens einen Sensor ist eine Größe, die eine Zustandsgröße des Nutzfahrzeugs oder des Anbaugeräts repräsentiert, detektierbar und der Steuereinrichtung übermittelbar. Mit der Steuereinrichtung ist eine Zustandsgröße des aktuellen Betriebszustands des Nutzfahrzeugs und/oder des Anbaugeräts ermittelbar. Das Hydraulikventil ist mit dem Hydrauliksystem und dem Aktuator hydraulisch wirkverbindbar. Das Hydraulikventil ist in Abhängigkeit des aktuellen Betriebszustands des Nutzfahrzeugs und/oder des Anbaugeräts ansteuerbar, um mit dem Aktuator die Lenkung des mindestens einen Rads zu sperren.

Erfindungsgemäß ist zunächst erkannt worden, dass insbesondere Traktoren ein eigenes Hydrauliksystem aufweisen, welches auch für Arbeitsfunktionen von an den Traktor angekoppelten Anbaugeräten genutzt wird. Daher ist grundsätzlich eine Infrastruktur vorhanden, die auch für eine Lenkung mindestens eines dem Anbaugerät zugeordneten lenkbaren Rads genutzt werden kann. Es ist also eine Steuereinrichtung, mit welcher ein entsprechendes Hydraulikventil angesteuert werden kann, entsprechend zu konfigurieren bzw. zu programmieren, damit in Abhängigkeit eines aktuellen Betriebszustands des Nutzfahrzeugs und/oder des Anbaugeräts der Aktuator derart angesteuert werden kann, dass die Lenkung des mindestens einen Rads des Anbaugeräts gesperrt werden kann. Sofern ein Anbaugerät verwendet wird, welches vergleichbar mit dem eingangs erwähnten, eine Nachlauflenkung aufweisenden Anbaugerät mit einem Lenkzylinder und einem Sperrventil ausgestattet ist, kann mit vergleichsweise geringem Aufwand ein am Traktor ohnehin vorhandenes Hydraulikventil (z.B. ein ESCV = Electronic Select Control Valve) und eine damit in Verbindung stehende Schnellkupplung mit einem Lenkzylinder des Anbaugeräts verbunden werden. Wenn nun die Steuereinrichtung entsprechend programmiert ist, kann in Abhängigkeit der von dem mindestens einen Sensor ermittelten Zustandsgröße des Nutzfahrzeugs und/oder des Anbaugeräts auf den aktuellen Betriebszustand des Nutzfahrzeugs bzw. des Anbaugeräts geschlossen werden und in Abhängigkeit davon das Hydraulikventil zum Sperren der Lenkung des mindestens einen Rads angesteuert werden.
Als Lenkung im Sinne der vorliegenden Erfindung ist insbesondere zu verstehen, dass die Orientierung eines Rads relativ zu dem Anbaugerät veränderbar ist. So kann grundsätzlich das Rad gesperrt sein oder sich völlig frei in seiner Orientierung einstellen, wie z.B. ein Nachlaufrad beim Befahren eines unebenen Untergrunds.

Gemäß einer bevorzugten Ausführungsform ist die Lenkung des mindestens einen Rads ausschließlich mittels des Aktuators beeinflussbar. Somit kann ausschließlich mittels des Aktuators das mindestens eine Rad bezüglich der Lenkung gesperrt bzw. freigegeben werden. Eine Zwangslenkung mit einem Gestänge ist also nicht erforderlich.

Bevorzugt ist das mindestens eine lenkbare Rad ein Teil einer Nachlauflenkachse oder einer Achsschenkellenkung oder einer Drehschemellenkung. Weiterhin ist es auch denkbar, dass das mindestens eine lenkbare Rad in Form eines Nachlaufrads oder eines Stützrads ausgebildet ist.

Mit dem mindestens einen Sensor ist vorzugsweise eine Größe detektierbar, welche die Ermittlung der Geschwindigkeit, der Beschleunigung, der Fahrtrichtung, des aktuellen Lenkwinkels des Nutzfahrzeugs, der Abweichung von einer vorgegebenen Fahrtrichtung, der räumlichen Position des Nutzfahrzeugs, der Gierbewegung oder des Giermoments des Nutzfahrzeugs, der Gierbewegung oder des Giermoments des Anbaugeräts, der Hangneigung des Nutzfahrzeugs, und/oder der Hangneigung des Anbaugeräts ermöglicht. Weiterhin kann mit dem mindestens einen Sensor eine Größe detektierbar sein, welche die Ermittlung der Drehzahl einer Motor- oder Getriebewelle, der Drehzahl mindestens eines Rads, des von einer Welle übertragenen Drehmoments, des von einem Antriebsaggregat abgegebenen Drehmoments, der Leistung oder der Auslastung eines Antriebsaggregats, des Schlupfs des Nutzfahrzeugs und/oder des Anbaugeräts über dem Untergrund, der Beschaffenheit des Untergrunds, einer Achslast, des Drucks oder des Volumenstroms oder der Volumenstromänderung einer Hydraulikflüssigkeit, des Ausfahrwegs eines Zylinders, insbesondere eines Lenkzylinders, der auf das Nutzfahrzeug wirkenden Kraft des Anbaugeräts, insbesondere einer Zugkraft, einer Querkraft und/oder einer Stützkraft, des Fahrzustands, und/oder der Triebkraft des Nutzfahrzeugs ermöglicht. Je nachdem, welche Größe mit dem mindestens einen Sensor tatsächlich detektiert wird, ist dieser entweder an dem Nutzfahrzeug oder an dem Anbaugerät angeordnet und speziell zum Detektieren dieser Größe ausgebildet.

Im Konkreten kann der Aktuator einen einfachwirkenden oder einen doppeltwirkenden Hydraulikzylinder aufweisen. Der Aktuator kann als Lenkzylinder für eine Nachlaufachse ausgebildet sein. Eine entsprechende Ausbildung einer Lenkachse bzw. einer lenkbaren Einzelradaufhängung des mindestens einen Rads des Anbaugeräts ist hierzu Voraussetzung.

Bevorzugt ist vorgesehen, dass die Lenkung des mindestens einen Rads dann sperrbar ist, wenn das Nutzfahrzeug rückwärts fährt. Hierdurch wird vermieden, dass das mindestens eine lenkbare Rad bei der Rückwärtsfahrt in eine "falsche" Richtung ausgelenkt wird. Da die Sperrung des mindestens einen Rads in Abhängigkeit des aktuellen Betriebszustands, nämlich beim Einlegen des Rückwärtsgangs bzw. beim Rückwärtsfahren des Nutzfahrzeugs bzw. des Anbaugeräts selbsttätig erfolgt, kann die Sperrung nicht vom Bediener des Nutzfahrzeugs vergessen werden, und es kann sich keine aus einer derartigen Unachtsamkeit des Bedieners ergebende kritische Situation einstellen.

Gemäß einer bevorzugten Ausführungsform ist die Lenkung des mindestens einen Rads dann sperrbar, wenn das Nutzfahrzeug einen vorgebbaren Geschwindigkeitswert überschreitet. Ein solcher Geschwindigkeitswert kann beispielsweise 15 oder 20 km/h betragen, da in diesem Fall davon ausgegangen werden kann, dass sich das Gespann auf der Straße und in einem Betriebszustand des Transports befindet. Hierbei fährt das Gespann mit einer erhöhten Geschwindigkeit und eine freie Auslenkbewegung des mindestens einen Rads des Anbaugeräts wird hierdurch vermieden.

Weiterhin kann vorgesehen sein, dass die Lenkung des mindestens einen Rads dann sperrbar ist, wenn auf das Nutzfahrzeug und/oder auf das Anbaugerät eine Querbeschleunigung und/oder eine Querkraft wirkt, welche einen vorgebbaren Wert überschreitet. Dies kann beispielsweise bei erhöhten Windgeschwindigkeiten in Querrichtung im Falle eines hoch bauenden Anbaugeräts auftreten, was ebenfalls ein Ausschlagen der Räder des Anbaugeräts zur Folge haben kann, wenn diese nicht in erfindungsgemäßer Weise gesperrt werden.

Bevorzugt ist die Lenkung des mindestens einen Rads dann sperrbar, wenn das Nutzfahrzeug und/oder das Anbaugerät eine Querneigung aufweist, welche einen vorgebbaren Wert überschreitet. Dies ist insbesondere bei einer Fahrt entlang eines Seitenhangs hilfreich, wo also aufgrund der auf das Anbaugerät wirkenden Hangabtriebskraft bei nicht gesperrter Lenkung des mindestens einen Rads die Gefahr besteht, dass das Anbaugerät seitlich talwärts ausbricht und der Fahrer des Nutzfahrzeugs die Kontrolle über das Gespann verliert.

Das Anbaugerät kann mittels eines Zugpendels, eines Zugmauls, einer Piton- oder Kugelkupplung, eines Dreipunkt-Geräteanbaus (wie beispielsweise in ISO 730 oder DIN 9674 definiert), einer so genannten Pickup-Hitch oder eines Hexapoden an das Nutzfahrzeug angekoppelt werden. Letztendlich kann das Anbaugerät mit allen gängigen Kopplungsarten an das Nutzfahrzeug angekoppelt werden, wobei die oben genannten Kopplungsarten die gängigsten auf dem landwirtschaftlichen Sektor sind.

Gemäß einer bevorzugten Ausführungsform ist das mindestens eine Rad mittels des Aktuators aktiv lenkbar. Der einzustellende Lenkwinkel des mindestens einen Rads ist in Abhängigkeit des aktuellen Betriebszustands des Nutzfahrzeugs und/oder des Anbaugeräts von der Steuereinrichtung errechenbar. Hierbei kann der am Nutzfahrzeug aktuell eingestellte Lenkwinkel eine Bezugsgröße zur Errechnung des einzustellenden Lenkwinkels des mindestens einen Rads des Anbaugeräts darstellen. Der Aktuator wird sodann von dem Hydraulikventil entsprechend angesteuert, wodurch der Lenkwinkel an dem mindestens einen Rad entsprechend eingestellt wird.

Das Hydraulikventil kann am Nutzfahrzeug oder am Anbaugerät angeordnet sein. Sofern das Nutzfahrzeug in Gestalt eines Traktors ausgebildet ist, ist das Hydraulikventil zweckmäßigerweise im Heckbereich des Traktors angeordnet bzw. es kann ein dort angeordnetes Hydraulikventil (ESCV), welches zur Versorgung von Hydraulikfunktionen von an den Traktor adaptierbaren Anbaugeräten genutzt wird, verwendet werden. Voraussetzung hierfür ist, dass sich ein solches Hydraulikventil elektronisch von der Steuereinrichtung ansteuern lässt. Alternativ kann das Hydraulikventil am Anbaugerät angeordnet sein und über eine entsprechende elektrische Leitungsverbindung - z.B. über eine am Nutzfahrzeug angebrachten Steckdose - mit der Steuereinrichtung verbunden werden. In jedem Fall ist das Hydraulikventil mit dem Hydrauliksystem des Nutzfahrzeugs und dem Aktuator hydraulisch zu verbinden, was beispielsweise über eine Hydraulik-Schnellkupplung geschehen kann.

Bevorzugt erfolgt eine selbsttätige Ansteuerung des Hydraulikventils. Dementsprechend ermittelt der mindestens eine Sensor stetig oder zumindest periodisch in vorgebbaren Zeitintervallen eine Größe, die eine Zustandsgröße des Nutzfahrzeugs oder des Anbaugeräts repräsentiert, und übermittelt diese der Steuereinrichtung. Die Steuereinrichtung errechnet hieraus eine Zustandsgröße bzw. den aktuellen Betriebszustand des Nutzfahrzeugs und/oder des Anbaugeräts. In Abhängigkeit davon erfolgt die selbsttätige Ansteuerung des Aktuators, so dass ein Bediener des Nutzfahrzeugs nicht aktiv die Lenkung des Anbaugeräts einstellen bzw. beeinflussen muss. Es kann jedoch vorgesehen sein, dass die Ansteuerung des Hydraulikventils abschaltbar ist, beispielsweise dann, wenn ein Bediener des Nutzfahrzeugs die Lenkung des mindestens einen Rads des Anbaugeräts manuell beeinflussen möchte.

Das Anbaugerät kann in Gestalt eines mehrachsigen aufgesattelten Anhängers ausgebildet sein. Der Anhänger kann eine lenkbare Achse und eine unlenkbare Achse oder zwei lenkbare Achsen oder eine Kombination aus mehreren lenkbaren und unlenkbaren Achsen aufweisen. In der Regel wird ein solcher Anhänger mittels einer Deichsel-Zugmaul-Verbindung an das Nutzfahrzeug angekoppelt.

In verfahrensmäßiger Hinsicht wird die eingangs genannte Aufgabe durch die Merkmale des Patentanspruchs 16 gelöst. Demgemäß ist ein Verfahren zum Betreiben eines Steuerungssystems vorgesehen, wobei das Steuerungssystem zum Lenken eines an ein landwirtschaftliches Nutzfahrzeug angekoppelten Anbaugeräts dient. Das Steuerungssystem umfasst eine Steuereinrichtung, mindestens einen Sensor, ein dem Nutzfahrzeug zugeordnetes Hydrauliksystem, ein elektronisch ansteuerbares Hydraulikventil, einen dem Anbaugerät zugeordneten hydraulischen Aktuator und mindestens ein dem Anbaugerät zugeordnetes lenkbares Rad. Mit dem mindestens einen Sensor wird eine Größe, die eine Zustandsgröße des Nutzfahrzeugs oder des Anbaugeräts repräsentiert, detektiert und der Steuereinrichtung übermittelt. Mit der Steuereinrichtung wird eine Zustandsgröße des aktuellen Betriebszustands des Nutzfahrzeugs und/oder des Anbaugeräts ermittelt. Das Hydraulikventil ist mit dem Hydrauliksystem und dem Aktuator hydraulisch wirkverbindbar. Das Hydraulikventil wird in Abhängigkeit des aktuellen Betriebszustands des Nutzfahrzeugs und/oder des Anbaugeräts angesteuert, um mit dem Aktuator die Lenkung des mindestens einen Rads zu sperren.

Das erfindungsgemäße Verfahren dient insbesondere zum Betreiben eines Steuerungssystems nach einem der Patentansprüche 1 bis 14, wobei sich einem auf dem vorliegenden Gebiet tätigen Fachmann in Kenntnis der das Steuerungssystem betreffenden Patentansprüche 1 bis 14 die entsprechenden Verfahrensschritte unmittelbar erschließen. Dementsprechend wird zur Vermeidung von Wiederholungen auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Erläuterung der bevorzugten Ausführungsbeispiele der Erfindung anhand der Zeichnungen verwiesen. In Verbindung mit der Erläuterung der bevorzugten Ausführungsbeispiele der Erfindung anhand der Zeichnungen werden auch im Allgemeinen bevorzugte Ausgestaltungen und Weiterbildungen der erfindungsgemäßen Lehre erläutert.

In den Zeichnungen zeigen:
- Fig. 1: in einer schematischen Darstellung eine Seitenansicht eines landwirtschaftlichen Nutzfahrzeugs und eines daran adaptierten Anbaugeräts, und
- Fig. 2: in einer schematischen Darstellung eine Aufsicht eines landwirtschaftlichen Nutzfahrzeugs mit einem Anbaugerät.

In den Figuren sind identische oder funktionsgleiche Bauteile bzw. Baugruppen mit denselben Bezugszeichen gekennzeichnet.

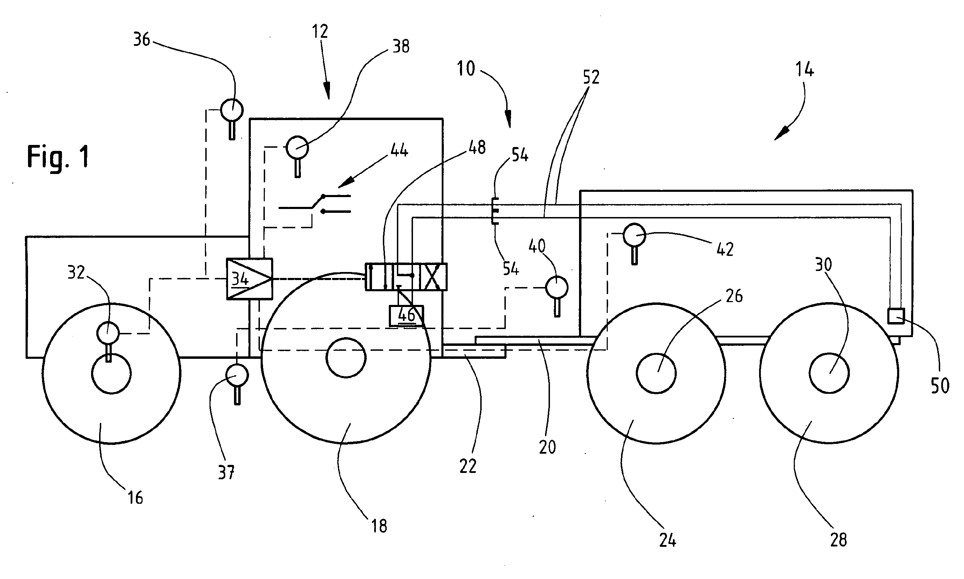

In Fig. 1 ist ein Gespann 10, bestehend aus einem landwirtschaftlichen Nutzfahrzeug 12 und einem Anbaugerät 14, gezeigt. Das landwirtschaftliche Nutzfahrzeug 12 ist in Form eines Traktors ausgebildet. Im Folgenden wird das Bezugszeichen 12 zur Kennzeichnung des Traktors verwendet. Das Anbaugerät 14 ist in Form eines gezogenen Anhängers ausgebildet. Im Folgenden wird das Bezugszeichen 14 zur Kennzeichnung des Anhängers verwendet. Der Traktor 12 weist zwei Vorderräder 16 und zwei Hinterräder 18 auf. Die Vorderräder 16 sind mit einer Einzelradaufhängung (nicht gezeigt) lenkbar aufgehängt. Der Anhänger 14 ist mit seiner Deichsel 20 an einem Zugpendel 22 des Traktors 12 angehängt. Der Anhänger 14 weist Vorderräder 24 auf, welche an einer nicht lenkbaren Vorderachse 26 drehbar gelagert sind. Die Hinterräder 28 des Anhängers 14 sind an einer Nachlauflenkachse 30 drehbar und lenkbar gelagert. Die Hinterräder 28 sind mit einer Einzelradaufhängung (nicht gezeigt) an dem Fahrgestell des Anhängers 14 aufgehängt.

Der Traktor 12 weist mehrere Sensoren auf. So kann beispielsweise mit einem Lenkwinkelsensor 32 der Lenkeinschlag eines Vorderrads 16 detektiert werden. Die von dem Lenkwinkelsensor 32 ermittelte Größe, welche von dem aktuellen Lenkwinkel des Vorderrads 16 abhängt, wird einer Steuereinrichtung 34 über die gestrichelt eingezeichneten elektrischen Leitungsverbindungen übermittelt. Mit einem Neigungswinkelsensor 36 kann die Quer- und Längsneigung des Traktors 12 gegenüber der Horizontalen detektiert werden. Ein Beschleunigungssensor 38 detektiert die Beschleunigung des Traktors 12. Mit einem Geschwindigkeitssensor 37 kann die Fortbewegungsgeschwindigkeit des Traktors 12 gegenüber dem Untergrund detektiert werden. An dem Anhänger 14 ist ein Beschleunigungssensor 40 bzw. ein Neigungswinkelsensor 42 vorgesehen, mit welchem die Beschleunigung bzw. die Quer- und Längsneigung des Anhängers 14 gegenüber der Horizontalen detektierbar ist. Die von den Sensoren 36, 37, 38, 40, 42 ermittelten Größen werden ebenfalls über die gestrichelt eingezeichneten Leitungsverbindungen der Steuereinheit 34 übermittelt. In Fig. 1 sind lediglich beispielhaft die Sensoren 32, 36, 37, 38, 40, 42 gezeigt, wobei andere und/oder weitere Sensoren zur Detektion zusätzlicher Größen vorgesehen sein können. Mit einem Fahrtrichtungswählhebel 44 kann zwischen Vorwärts- und Rückwärtsfahrt des Traktors 12 umgeschaltet werden. Der jeweilige Zustand des Fahrtrichtungswählhebels 44 wird ebenfalls der Steuereinrichtung 34 mitgeteilt.

Der Traktor 12 weist ein lediglich schematisch angedeutetes Hydrauliksystem 46 auf, mit welchem unter Druck stehende Hydraulikflüssigkeit hydraulischen Verbrauchern des Traktors 12 und des Anhängers 14 zur Verfügung gestellt werden kann. Das Hydrauliksystem 46 ist mit einem Hydraulikventil 48 hydraulisch verbunden. Das Hydraulikventil 48 kann elektronisch über die gestrichelt eingezeichnete Leitung von der Steuereinrichtung 34 in Abhängigkeit des aktuellen Betriebszustands des Traktors 12 und/oder des Anhängers 14 angesteuert werden. An dem Anhänger 14 ist ein schematisch eingezeichnete Aktuator 50 vorgesehen, wobei der Aktuator 50 einen Hydraulikzylinder aufweist. Der Aktuator 50 ist über Hydraulikleitungen 52 mit dem Hydraulikventil 48 und somit mit dem Hydrauliksystem 46 des Traktors 12 mit Hydraulikschnellkupplungen 54 hydraulisch verbunden. Das Hydraulikventil 48 weist drei Ventilstellungen auf. In der in Fig. 1 gezeigten aktiven Ventilstellung des Hydraulikventils 48 befindet sich der Aktuator 50 in Schwimmstellung. Dementsprechend ist die Lenkung der Hinterräder 28 nicht gesperrt. Wird die linke Ventilstellung des Hydraulikventils 48 in die aktive Position verbracht, so wird der Aktuator 50 in eine Richtung ausgelenkt, in der die Lenkung der Hinterräder 28 gesperrt ist. Die rechte Ventilstellung des Hydraulikventils 48 wird für die vorliegende Anwendung nicht verwendet.

Erfindungsgemäß umfasst das Steuerungssystem zum Lenken eines an den Traktor 12 angekoppelten Anhängers 14 also eine Steuereinrichtung 34, mindestens einen Sensor (z.B. den Lenkwinkelsensor 32), ein dem Traktor 12 zugeordnetes Hydrauliksystem 46, ein elektronisch ansteuerbares Hydraulikventil 48, einen dem Anhänger 14 zugeordneten hydraulischen Aktuator 50 und mindestens ein dem Anhänger zugeordnetes lenkbares Rad 28. Mit den mindestens einen Sensor (z.B. dem Lenkwinkelsensor 32) ist eine Größe, die eine Zustandsgröße des Traktors repräsentiert (z.B. der Lenkwinkel des Vorderrads 16), detektierbar und der Steuereinrichtung 34 übermittelbar. Mit der Steuereinrichtung 34 ist eine Zustandsgröße des aktuellen Betriebszustands des Traktors 12 ermittelbar. Das Hydraulikventil 48 ist mit dem Hydrauliksystem 46 und dem Aktuator 50 hydraulisch wirkverbindbar. Das Hydraulikventil 48 ist in Abhängigkeit des aktuellen Betriebszustands des Traktors 12 und/oder des Anbaugeräts 14 ansteuerbar, um mit dem Aktuator 50 die Lenkung des mindestens einen Rads 28 zu sperren.

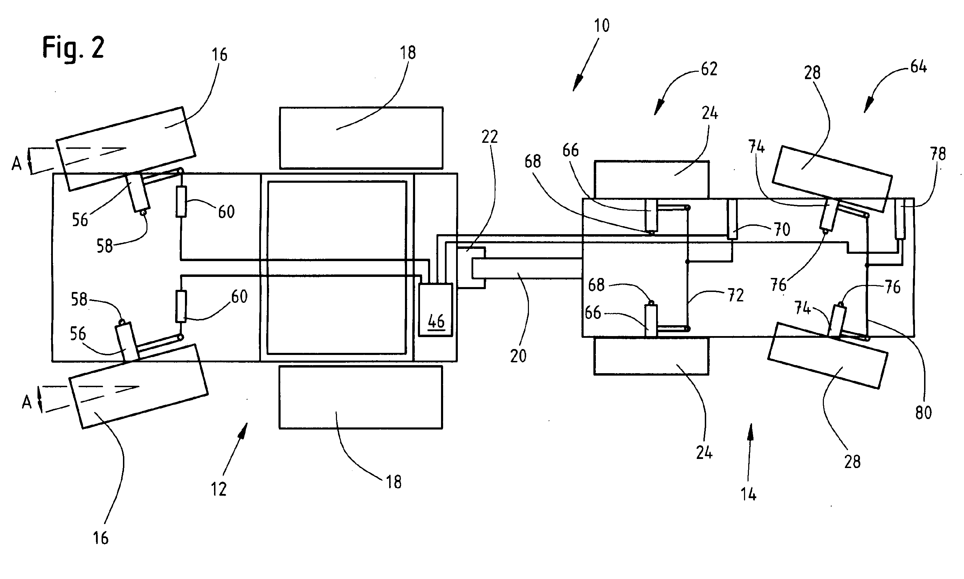

Fig. 2 zeigt in einer Aufsicht ebenfalls ein Gespann 10, bestehend aus einem in Form eines Traktors 12 ausgebildeten landwirtschaftlichen Nutzfahrzeug und einem in Form eines Anhängers 14 ausgebildeten Anbaugerät. Der Traktor 12 weist zwei Hinterräder 18 und zwei mit einer Einzelradaufhängung lenkbar aufgehängte Vorderräder 16 auf. Die Vorderräder 16 werden von Achsschenkeln 56 drehbar getragen. Die Achsschenkel 56 sind um eine im Wesentlichen vertikal ausgerichtete Achse 58 drehbar gelagert, so dass mit Lenkzylindern 60 der entsprechende Lenkwinkel A des Traktors 12 eingestellt werden kann.

Gemäß Fig. 2 weist der Anhänger 14 zwei Lenkachsen 62, 64 auf. Die Vorderräder 24 und die Hinterräder 28 des Anhängers 14 sind jeweils mit einer Einzelradaufhängung lenkbar aufgehängt. Die Achsschenkel 66 der Vorderräder 24 sind jeweils um eine im Wesentlichen vertikal orientierte Drehachse 68 drehbar gelagert. Ein Aktuator 70 stellt über ein Lenkgestänge 72 den Lenkwinkeleinschlag der Vorderräder 24 des Anhängers 14 ein. Die Achsschenkel 74 der Hinterräder 28 sind jeweils um eine im Wesentlichen vertikal ausgerichtete Drehachse 76 drehbar gelagert. Ein Aktuator 78 stellt über ein Lenkgestänge 80 den Lenkwinkeleinschlag der Hinterräder 28 des Anhängers 14 ein. Die Aktuatoren 60, 70 und 78 sind mittels der gestrichelt eingezeichneten Hydraulikleitungen mit dem Hydrauliksystem 46 des Traktors 12 verbunden. Die Aktuatoren 60, 70 und 78 sind jeweils einzeln ansteuerbar, wobei ein beliebiger Lenkwinkel an dem jeweiligen Rad 16, 24 und 28 eingestellt werden kann. Dementsprechend sind für jeden Aktuator 60, 70, 78 eigene Verbindungsleitungen und jeweils ein eigenes Hydraulikventil vorgesehen. Mit den Aktuatoren 70, 78 kann insbesondere die Lenkung der Vorderräder 24 bzw. Hinterräder 28 des Anhängers 14 gesperrt werden, beispielsweise im Falle einer Transportfahrt mit einer Geschwindigkeit von 50 km/h auf einer Straße oder bei einer Rückwärtsfahrt.

Abschließend sei darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Steuerungssystem zum Lenken eines an ein landwirtschaftliches Nutzfahrzeug angekoppelten Anbaugeräts, mit einer Steuereinrichtung (34), mindestens einem Sensor (32, 36, 37, 38, 40, 42), einem dem Nutzfahrzeug (12) zuordenbaren Hydrauliksystem (46), einem elektronisch ansteuerbaren Hydraulikventil (48), einem dem Anbaugerät (14) zuordenbaren hydraulischen Aktuator (50, 70, 78) und mindestens einem dem Anbaugerät (14) zuordenbaren lenkbaren Rad (24, 28), wobei mit dem mindestens einen Sensor (32, 36, 37, 38, 40, 42) eine Größe, die eine Zustandsgröße des Nutzfahrzeugs (12) oder des Anbaugeräts (14) repräsentiert, detektierbar und der Steuereinrichtung (34) übermittelbar ist, wobei mit der Steuereinrichtung (34) eine Zustandsgröße des aktuellen Betriebszustands des Nutzfahrzeugs (12) und/oder des Anbaugeräts (14) ermittelbar ist, wobei das Hydraulikventil (48) mit dem Hydrauliksystem (46) und dem Aktuator (50, 70, 78) hydraulisch wirkverbindbar ist, und wobei das Hydraulikventil (48) in Abhängigkeit des aktuellen Betriebszustands des Nutzfahrzeugs (12) und/oder des Anbaugeräts (14) ansteuerbar ist, um mit dem Aktuator (50, 70, 78) die Lenkung des mindestens einen Rads (24, 28) zu sperren, **dadurch gekennzeichnet, dass** die Lenkung des mindestens einen Rads (24, 28) selbsttätig gesperrt wird, wenn das Nutzfahrzeug (12) rückwärts fährt.

2. Steuerungssystem nach Anspruch 1, **dadurch gekennzeichnet, dass** die Lenkung des mindestens einen Rads (24, 28) ausschließlich von dem Aktuator (50, 70, 78) beeinflussbar ist.

3. Steuerungssystem nach Anspruch 1 oder 2, **dadurch gekennzeichnet, dass** das mindestens eine lenkbare Rad (24, 28) ein Teil einer Nachlauflenkachse (30, 62, 64) oder einer Achsschenkellenkung oder einer Drehschemellenkung ist, oder dass das mindestens eine lenkbare Rad in Form eines Stützrads ausgebildet ist.

4. Steuerungssystem einem der Ansprüche 1 bis 3, **dadurch gekennzeichnet, dass** mit dem mindestens einen Sensor (32, 36, 37, 38, 40, 42) eine Größe detektierbar ist, welche die Ermittlung
- der Geschwindigkeit,
- der Beschleunigung,
- der Fahrtrichtung,
- des aktuell eingestellten Lenkwinkels (A) des Nutzfahrzeugs (12),
- der Abweichung von einer vorgegebenen Fahrtrichtung,
- der räumlichen Position des Nutzfahrzeugs (12),
- der Gierbewegung oder des Giermoments des Nutzfahrzeugs (12),
- der Gierbewegung oder des Giermoments des Anbaugeräts (14),
- der Hangneigung des Nutzfahrzeugs (12), und/oder
- der Hangneigung des Anbaugeräts (14) ermöglicht.

5. Steuerungssystem nach einem der Ansprüche 1 bis 4, **dadurch gekennzeichnet, dass** mit dem mindestens einen Sensor (32, 36, 37, 38, 40, 42) eine Größe detektierbar ist, welche die Ermittlung
- der Drehzahl einer Motor- oder Getriebewelle,
- der Drehzahl mindestens eines Rads (16, 18, 24, 28),
- des von einer Welle übertragenen Drehmoments,
- des von einem Antriebsaggregat abgegebenen Drehmoments,
- der Leistung oder der Auslastung eines Antriebsaggregats,
- des Schlupfs des Nutzfahrzeugs (12) und/oder des Anbaugeräts (14) über dem Untergrund,
- der Beschaffenheit des Untergrunds,
- einer Achslast,
- des Drucks oder des Volumenstroms oder der Volumenstromänderung einer Hydraulikflüssigkeit,
- des Ausfahrwegs eines Zylinders, insbesondere eines Lenkzylinders (50, 60, 70, 78),
- der auf das Nutzfahrzeug (12) wirkenden Kraft des Anbaugeräts (14), insbesondere einer Zugkraft, einer Querkraft und/oder einer Stützkraft,
- des Fahrzustands, und/oder
- der Triebkraft des Nutzfahrzeugs (12) ermöglicht.

6. Steuerungssystem nach einem der Ansprüche 1 bis 5, **dadurch gekennzeichnet, dass** der Aktuator (50, 70, 78) einen einfachwirkenden oder einen doppeltwirkenden Hydraulikzylinder aufweist.

7. Steuerungssystem nach einem der Ansprüche 1 bis 6, **dadurch gekennzeichnet, dass** die Lenkung des mindestens einen Rads (24, 28) dann sperrbar ist, wenn das Nutzfahrzeug (12) einen vorgebbaren Geschwindigkeitswert überschreitet.

8. Steuerungssystem nach einem der Ansprüche 1 bis 7, **dadurch gekennzeichnet, dass** die Lenkung des mindestens einen Rads (24, 28) dann sperrbar ist, wenn auf das Nutzfahrzeug (12) und/oder auf das Anbaugerät (14) eine Querbeschleunigung und/oder eine Querkraft wirkt, welche einen vorgebbaren Wert überschreitet.

9. Steuerungssystem nach einem der Ansprüche 1 bis 8, **dadurch gekennzeichnet, dass** die Lenkung des mindestens einen Rads (24, 28) dann sperrbar ist, wenn das Nutzfahrzeug (12) und/oder das Anbaugerät (14) eine Querneigung aufweist, welche einen vorgebbaren Wert überschreitet.

10. Steuerungssystem nach einem der Ansprüche 1 bis 9, **dadurch gekennzeichnet, dass** das Anbaugerät (14) mittels eines Zugpendels (22), eines Zugmauls, einer Pitonkupplung, einer Kugelkupplung, eines Dreipunkt-Geräteanbaus, einer Pickup-Hitch oder eines Hexapoden an das Nutzfahrzeug ankoppelbar ist.

11. Steuerungssystem nach einem der Ansprüche 1 bis 10, **dadurch gekennzeichnet, dass** das mindestens eine Rad (24, 28) von dem Aktuator (50, 70, 78) aktiv lenkbar ist, wobei der einzustellende Lenkwinkel des mindestens einen Rads (24, 28) in Abhängigkeit des aktuellen Betriebszustands des Nutzfahrzeugs (12) und/oder des Anbaugeräts (14) errechenbar ist.

12. Steuerungssystem nach einem der Ansprüche 1 bis 11, **dadurch gekennzeichnet, dass** das Hydraulikventil (48) am Nutzfahrzeug (12) oder am Anbaugerät (14) angeordnet ist.

13. Steuerungssystem nach einem der Ansprüche 1 bis 12, **dadurch gekennzeichnet, dass** die Ansteuerung des Hydraulikventils (48) selbsttätig erfolgt und/oder dass die Ansteuerung des Hydraulikventils (48) abschaltbar ist.

14. Steuerungssystem nach einem der Ansprüche 1 bis 13, **dadurch gekennzeichnet, dass** das Anbaugerät (14) in Gestalt eines mehrachsigen aufgesattelten Anhängers ausgebildet ist.

15. Verfahren zum Betreiben eines Steuerungssystems nach einem der Ansprüche 1 bis 14, wobei das Steuerungssystem zum Lenken eines an ein landwirtschaftliches Nutzfahrzeug (12) angekoppelten Anbaugeräts (14) dient, wobei das Steuerungssystem eine Steuereinrichtung (34), mindestens einen Sensor (32, 36, 37, 38, 40, 42), ein dem Nutzfahrzeug (12) zugeordnetes Hydrauliksystem (46), ein elektronisch ansteuerbares Hydraulikventil (48), einen dem Anbaugerät (14) zugeordneten hydraulischen Aktuator (50, 70, 78) und mindestens ein dem Anbaugerät (14) zugeordnetes lenkbares Rad (24, 28) aufweist, wobei mit dem mindestens einen Sensor (32, 36, 37, 38, 40, 42) eine Größe, die eine Zustandsgröße des Nutzfahrzeugs (12) oder des Anbaugeräts (14) repräsentiert, detektiert und der Steuereinrichtung (34) übermittelt wird, wobei mit der Steuereinrichtung (34) eine Zustandsgröße des aktuellen Betriebszustands des Nutzfahrzeugs (12) und/oder des Anbaugeräts (14) ermittelt wird, wobei das Hydraulikventil (48) mit dem Hydrauliksystem (46) und dem Aktuator (50, 70, 78) hydraulisch wirkverbindbar ist, und wobei das Hydraulikventil (48) in Abhängigkeit des aktuellen Betriebszustands des Nutzfahrzeugs (12) und/oder des Anbaugeräts (14) angesteuert wird, um mit dem Aktuator (50, 70, 78) die Lenkung des mindestens einen Rads (24, 28) zu sperren.

## Claims

1. Control system for steering an implement which is coupled to an agricultural utility vehicle, having a control device (34), at least one sensor (32, 36, 37, 38, 40, 42), a hydraulic system (46) assignable to the utility vehicle (12), an electronically actuable hydraulic valve (48), a hydraulic actuator (50; 70, 78) assignable to the implement (14) and at least one steerable wheel (24, 28) assignable to the implement (14), wherein a variable which represents a status variable of the utility vehicle (12) or of the implement (14) can be detected with the at least one sensor (32, 36, 37, 38, 40, 42) and can be transmitted to the control device (34), wherein a status variable of the current operating state of the utility vehicle (12) and/or of the implement (14) can be determined with the control device (34), wherein the hydraulic valve (48) can be operatively connected in a hydraulic fashion to the hydraulic system (46) and the actuator (50, 70, 78), and wherein the hydraulic valve (48) can be actuated as a function of the current operating state of the utility vehicle (12) and/or of the implement (14) in order to block the steering of the at least one wheel (24, 28) with the actuator (50, 70, 78), **characterized in that** the steering of the at least one wheel (24, 28) is blocked automatically if the utility vehicle (12) is reversing.

2. Control system according to Claim 1, **characterized in that** the steering of the at least one wheel (24, 28) can be influenced exclusively by the actuator (50, 70, 78).

3. Control system according to Claim 1 or 2, **characterized in that** the at least one steerable wheel (24, 28) is part of a trailing steering axle (30, 62, 64) or of a steering stub axle system or of a fifth wheel steering system, or **in that** the at least one steerable wheel is embodied in the form of a drawbar jack castor wheel.

4. Control system according to one of Claims 1 to 3, **characterized in that** with the at least one sensor (32, 36, 37, 38, 40, 42) it is possible to detect a variable which permits determination of
- the speed,
- the acceleration,
- the direction of travel,
- the currently set steering angle (A) of the utility vehicle (12),
- the deviation from a predefined direction of travel,
- the spatial position of the utility vehicle (12),
- the yaw movement or the yaw torque of the utility vehicle (12),
- the yaw movement or the yaw torque of the implement (14),
- the gradient of the utility vehicle (12) and/or
- the gradient of the implement (14).

5. Control system according to one of Claims 1 to 4, **characterized in that** with the at least one sensor (32, 36, 37, 38, 40, 42) it is possible to detect a variable which permits determination of
- the rotational speed of an engine shaft or gear shaft,
- the rotational speed of at least one wheel (16, 18, 24, 28),
- the torque which is transmitted by a shaft,
- the torque which is output by a drive unit,
- the power or the capacity utilization of a drive unit,
- the slip of the utility vehicle (12) and/or of the implement (14) with respect to the underlying surface,
- the quality of the underlying surface,
- an axle load,
- the pressure or the volume flow rate or the change in the volume flow rate of a hydraulic fluid,
- the excursion travel of a cylinder, in particular of a steering cylinder (50, 60, 70, 78),
- the force of the implement (14) acting on the utility vehicle (12), in particular a traction force, a lateral force and/or a supporting force,
- the travel state and/or
- the propulsion force of the utility vehicle (12).

6. Control system according to one of Claims 1 to 5, **characterized in that** the actuator (50, 70, 78) has a single-acting or a double-acting hydraulic cylinder.

7. Control system according to one of Claims 1 to 6, **characterized in that** the steering of the at least one wheel (24, 28) can be blocked if the utility vehicle (12) exceeds a predefinable speed value.

8. Control system according to one of Claims 1 to 7, **characterized in that** the steering of the at least one wheel (24, 28) can be blocked if a lateral acceleration and/or a lateral force which exceeds a predefinable value acts on the utility vehicle (12) and/or on the implement (14).

9. Control system according to one of Claims 1 to 8, **characterized in that** the steering of the at least one wheel (24, 28) can be blocked if the utility vehicle (12) and/or the implement (14) has a lateral inclination which exceeds a predefinable value.

10. Control system according to one of Claims 1 to 9, **characterized in that** the implement (14) can be coupled to the utility vehicle by means of a hitch (22), a drawbar jaw, a bayonet coupling, a ball coupling, a three-point equipment attachment, a pickup hitch or a hexapod.

11. Control system according to one of Claims 1 to 10, **characterized in that** the at least one wheel (24, 28) can be actively steered by the actuator (50, 70, 78), wherein the steering angle which is to be set for the at least one wheel (24, 28) can be calculated as a function of the current operating state of the utility vehicle (12) and/or of the implement (14).

12. Control system according to one of Claims 1 to 11, **characterized in that** the hydraulic valve (48) is arranged on the utility vehicle (12) or on the implement (14).

13. Control system according to one of Claims 1 to 12, **characterized in that** the hydraulic valve (48) is actuated automatically, and/or **in that** the actuation of the hydraulic valve (48) can be switched off.

14. Control system according to one of Claims 1 to 13, **characterized in that** the implement (14) is embodied in the form of a multi-axle trailer which is attached in semitrailer fashion.

15. Method for operating a control system according to one of Claims 1 to 14, wherein the control system is used to steer an implement (14) which is coupled to an agricultural utility vehicle (12), wherein the control system has a control device (34), at least one sensor (32, 36, 37, 38, 40, 42), a hydraulic system (46) which is assigned to the utility vehicle (12), an electronically actuable hydraulic valve (48), a hydraulic actuator (50, 70, 78) which is assigned to the implement (14) and at least one steerable wheel (24, 28) which is assigned to the implement (14), wherein a variable which represents a status variable of the utility vehicle (12) or of the implement (14) is detected with the at least one sensor (32, 36, 37, 38, 40, 42) and transmitted to the control device (34), wherein a status variable of the current operating state of the utility vehicle (12) and/or of the implement (14) is determined with the control device (34), wherein the hydraulic valve (48) can be operatively connected in a hydraulic fashion to the hydraulic system (46) and the actuator (50, 70, 78), and wherein the hydraulic valve (48) is actuated as a function of the current operating state of the utility vehicle (12) and/or of the implement (14) in order to block the steering of the at least one wheel (24, 28) with the actuator (50, 70, 78).

## Revendications

1. Système de commande pour guider un outil porté couplé à un véhicule utilitaire agricole, comprenant un dispositif de commande (34), au moins un capteur (32, 36, 37, 38, 40, 42), un système hydraulique (46) pouvant être attribué au véhicule utilitaire (12), une vanne hydraulique (48) activable de façon électronique, un actionneur (50, 70, 78) hydraulique pouvant être attribué à l'outil porté (14) et au moins une roue (24, 28) guidable, pouvant être attribuée à l'outil porté (14), une grandeur, qui représente une grandeur d'état du véhicule utilitaire (12) ou de l'outil porté (14), pouvant être détectée avec le au moins un capteur (32, 36, 37, 38, 40, 42) et pouvant être transmise au dispositif de commande (34), une grandeur d'état de l'état de service actuel du véhicule utilitaire (12) et/ou de l'outil porté (14) pouvant être déterminée avec le dispositif de commande (34), la vanne hydraulique (48) pouvant être reliée hydrauliquement de façon active avec le système hydraulique (46) et l'actionneur (50, 70, 78), et la vanne hydraulique (48) pouvant être activée en fonction de l'état de service actuel du véhicule utilitaire (12) et/ou de l'outil porté (14), afin de bloquer le guidage de la au moins une roue (24, 28) avec l'actionneur (50, 70, 78), **caractérisé en ce que** le guidage de la au moins une roue (24, 28) est bloqué automatiquement lorsque le véhicule utilitaire (12) roule en marche arrière.

2. Système de commande selon la revendication 1, **caractérisé en ce que** le guidage de la au moins une roue (24, 28) est influencé exclusivement par l'actionneur (50, 70, 78).

3. Système de commande selon la revendication 1 ou 2, **caractérisé en ce que** la au moins une roue (24, 28) guidable est une partie d'un essieu orientable entraîné (30, 62, 64) ou d'un guidage de fusée d'essieu ou d'un guidage de sellette, ou **en ce que** la au moins une roue guidable est conçue sous la forme d'une roue de soutien.

4. Système de commande selon l'une quelconque des revendications 1 à 3, **caractérisé en ce qu'**une grandeur peut être détectée avec le au moins un capteur (32, 36, 37, 38, 40, 42), laquelle grandeur permet la détermination
- de la vitesse,
- de l'accélération,
- du sens de marche,
- de l'angle de braquage (A) actuellement réglé du véhicule utilitaire (12),
- de l'écart par rapport à un sens de marche prédéfini,
- de la position dans l'espace du véhicule utilitaire (12),
- du mouvement de lacet ou du couple de lacet du véhicule utilitaire (12),
- du mouvement de lacet ou du couple de lacet de l'outil porté (14),
- de l'inclinaison de pente du véhicule utilitaire (12), et/ou
- de l'inclinaison de pente de l'outil porté (14).

5. Système de commande selon l'une quelconque des revendications 1 à 4, **caractérisé en ce qu'**une grandeur peut être détectée avec le au moins un capteur (32, 36, 37, 38, 40, 42), laquelle grandeur permet la détermination
- du régime d'un arbre de moteur ou d'un arbre de transmission,
- du régime d'au moins une roue (16, 18, 24, 28),
- du couple transféré par un arbre,
- du couple délivré par un groupe d'entraînement,
- de la puissance ou du degré d'utilisation d'un groupe d'entraînement,
- du glissement du véhicule utilitaire (12) et/ou de l'outil porté (14) au-dessus du sol,
- de la nature du sol,
- d'une charge sur essieu,
- de la pression ou du flux volumique ou de la variation du flux volumique d'un liquide hydraulique,
- de la course de sortie d'un cylindre, en particulier d'un cylindre de guidage (50, 60, 70, 78),
- de la force, agissant sur le véhicule utilitaire (12), de l'outil porté (14), en particulier d'une force de traction, d'une force transversale et/ou d'une force de soutien,
- de l'état de roulement, et/ou
- de la force motrice du véhicule utilitaire (12).

6. Système de commande selon l'une quelconque des revendications 1 à 5, **caractérisé en ce que** l'actionneur (50, 70, 78) présente un vérin hydraulique à simple effet ou un vérin hydraulique à double effet.

7. Système de commande selon l'une quelconque des revendications 1 à 6, **caractérisé en ce que** le guidage de la au moins une roue (24, 28) peut être bloqué dans le cas où le véhicule utilitaire (12) dépasse une valeur de vitesse prédéfinissable.

8. Système de commande selon l'une quelconque des revendications 1 à 7, **caractérisé en ce que** le guidage de la au moins une roue (24, 28) peut être bloqué dans le cas où une accélération transversale et/ou une force transversale, qui dépasse une valeur prédéfinissable, agit sur le véhicule utilitaire (12) et/ou l'outil porté (14).

9. Système de commande selon l'une quelconque des revendications 1 à 8, **caractérisé en ce que** le guidage de la au moins une roue (24, 28) peut être bloqué dans le cas où le véhicule utilitaire (12) et/ou l'outil porté (14) présente une inclinaison transversale qui dépasse une valeur prédéfinissable.

10. Système de commande selon l'une quelconque des revendications 1 à 9, **caractérisé en ce que** l'outil porté (14) peut être couplé au véhicule utilitaire au moyen d'un dispositif oscillant de traction (22), d'une mâchoire de traction, d'un accouplement à piton, d'un accouplement à boule, d'un montage d'outil en trois points, d'un pickup-hitch ou d'un hexapode.

11. Système de commande selon l'une quelconque des revendications 1 à 10, **caractérisé en ce que** la au moins une roue (24, 28) peut être guidée activement par l'actionneur (50, 70, 78), l'angle de braquage à régler de la au moins une roue (24, 28) pouvant être calculé en fonction de l'état de service actuel du véhicule utilitaire (12) et/ou de l'outil porté (14).

12. Système de commande selon l'une quelconque des revendications 1 à 11, **caractérisé en ce que** la vanne hydraulique (48) est disposée sur le véhicule utilitaire (12) ou sur l'outil porté (14).

13. Système de commande selon l'une quelconque des revendications 1 à 12, **caractérisé en ce que** l'activation de la vanne hydraulique (48) s'effectue automatiquement et/ou **en ce que** l'activation de la vanne hydraulique (48) est déconnectable.

14. Système de commande selon l'une quelconque des revendications 1 à 13, **caractérisé en ce que** l'outil porté (14) est conçu sous la forme d'une remorque semiportée à plusieurs essieux.

15. Procédé pour exploiter un système de commande selon l'une quelconque des revendications 1 à 14, le système de commande servant au guidage d'un outil porté (14) couplé à un véhicule utilitaire (12) agricole, le système de commande présentant un dispositif de commande (34), au moins un capteur (32, 36, 37, 38, 40, 42), un système hydraulique (46) attribué au véhicule utilitaire (12), une vanne hydraulique (48) activable de façon électronique, un actionneur (50, 70, 78) hydraulique attribué à l'outil porté (14) et au moins une roue (24, 28) guidable attribuée à l'outil porté (14), une grandeur, qui représente une grandeur d'état du véhicule utilitaire (12) ou de l'outil porté (14), étant détectée avec le au moins un capteur (32, 36, 37, 38, 40, 42) et étant transmise au dispositif de commande (34), une grandeur d'état de l'état de service actuel du véhicule utilitaire (12) et/ou de l'outil porté (14) étant déterminée avec le dispositif de commande (34), la vanne hydraulique (48) pouvant être reliée de façon active hydrauliquement au système hydraulique (46) et l'actionneur (50, 70, 78), et la vanne hydraulique (48) étant activée en fonction de l'état de service actuel du véhicule utilitaire (12) et/ou de l'outil porté (14), afin de bloquer le guidage de la au moins une roue (24, 28) avec l'actionneur (50, 70, 78).
